# EUROPEAN PATENT APPLICATION

(11) **EP 2 743 661 A1**
(43) Date of publication of application: **18.06.2014**
(21) Application number: 12831430.9
(22) Date of filing: 26.04.2012
(51) Int. Cl.: G01K 17/08

(54) **HEAT METER**

(30) Priority: 14.09.2011 UA 1111015
(71) Applicant: Cherepnin, Oleg Mikhailovych, Kiev 02140 (UA)
(72) Inventor: Cherepnin, Oleg Mikhailovych, Kiev 02140 (UA)
(74) Representative: Michalski Hüttermann & Partner Patentanwälte
(86) International application number: PCT/UA2012/000048
(87) International publication number: WO 2013/039460

(57) **Abstract**

The heat meter relates to the measurement and accounting devices of heat energy transferred in pipelines by liquid heat carriers. The heat meter includes the heat carrier's consumption measuring element, the calculator equipped with a heat carrier's outflow and return flow temperature sensing elements and a voltage source. The calculator consists of two blocks: the sensor, which is located directly at the pipeline, alongside the heat carrier's consumption measuring element and the heat carrier's outflow and return flow temperature sensing element, and the calculating block which is located some distance away from the sensor. The sensor is made with an ability of the heat carrier's consumption element's and heat carrier's outflow and return flow temperature sensing element's signal conversion into a comprehensive digital output signal, proportional to the heat carrier's consumption and the outflow and return flow temperatures with a possibility of its transmission through a communication channel. The calculating block is made with a capability of receiving, processing, and storing the said comprehensive signal through the communication channel, and indicating the heat consumption aggregated data.

## Description

The invention relates to the measurement and accounting devices of heat energy transferred in pipelines by liquid heat carriers.

The known heat meter which includes a heat carrier's consumption measuring element and a calculator equipped with a heat carrier's outflow and return flow temperature sensing elements and a voltage source /RU 2148803/.

The disadvantage of the said heat meter is its low operational characteristics, which leads to excessive operational expenses.

The reason of the excessive operational expenses is the fact that for water meter's checkup or maintenance, the heat meter should be dismantled at the installation site. Thereafter it must be transported to the specialized metrological organization that has the permission to perform checkup and maintenance. Then, the heat meter must be installed into the pipeline and a representative of the operational organization must be called to put the meter into operation. The procedure should be repeated after the expiration of the verification interval.

In some countries, i.e. Germany, after the expiration of the verification interval, a complete replacement of the water meter is performed. This process requires even more operational expenses.

The claimed invention solves the problem of reducing the operational costs by improving the heat meter's construction. The sensor is singled out of the calculator and installed jointly with the heat carrier's consumption measuring element together with the mounting of the heat carrier's outflow and return flow temperature sensing elements directly to the pipeline.

The posed problem is solved by a heat meter, which includes a heat carrier's consumption measuring element, a calculator equipped with a heat carrier's outflow and return flow temperature sensing elements and a voltage source, in which, according to the invention, the calculator consists of two blocks: the sensor, which is located directly at the pipeline, alongside the heat carrier's consumption measuring element and the heat carrier's outflow and return flow temperature sensing element, and the calculating block which is located some distance away from the sensor with the heat carrier's consumption measuring element. The said sensor is made with an ability of the heat carrier's consumption measuring element's and heat carrier's outflow and return flow temperature sensing element's signal conversion into a comprehensive digital output signal proportional to the heat carrier's consumption and the outflow and return flow temperatures with a possibility of its transmission through a communication channel. The calculating block is made with a capability of receiving through the communication channel, processing, and storing the said comprehensive signal and indicating the heat consumption aggregated data.

This specific constructive execution of heat meter's elements enables autonomous checkup and replacement directly at the installation site, thus providing operational convenience and reduction of operational and repair costs. Moreover a system consisting of one calculating block and several heat carriers' consumption measuring elements and temperature sensing elements can be set up without any additional expenditure.

The invention is elucidated by the following illustrations, where the heat meter's flowchart is shown:
The flowchart contains:
   - pos. 1 - heat carrier's consumption measuring element
   - pos. 2 - the calculator
   - pos. 3 - the sensor
   - pos. 4 - the calculating block
   - pos. 5 - temperature sensing element mounted on the heat carrier's outflow
   - pos. 6 - temperature sensing element mounted on the heat carrier's return flow

The heat meter is mounted by the consumer, for example at his apartment, equipped with a heat supply system, as follows. At first, the body, inside which the heat carrier's consumption measuring element **1** (not shown on the flowchart), for example a vane wheel with magnets, is located, is installed into the socket of the pipeline. This provides heat carrier outlet, for instance hot water, from the emitter of heat energy, for example a heat consumer's radiator battery. The sensor **3** of the calculator **2** connected to the heat carrier's consumption measuring element **1,** for example, by means of an inductive link, is electrically connected with the temperature sensing elements **5, 6** mounted on the outflow (supply) and the return flow (deferent) heat carrier's pipelines respectively. The calculating block **4** is installed some distance away from the sensor **3.**

The heat meter works as follows. The heat carrier's (hot water) temperature is, for instance, 75 degrees Celsius. When the heat carrier passes the heat energy emitter, for example a radiator battery, it gives away a part of its heat energy to the surrounding area. Thus, the temperature in the deferent pipeline decreases, for example, to 50 degrees Celsius. The heat carrier's consumption measuring element **1** gives the signal, proportional to the heat carrier's consumption, to the sensor **3.** In their turn, the heat sensing elements **5, 6** mounted on the outflow and return flow heat carrier's pipelines, send signals to the sensor **3.** The sensor 3 generates a comprehensive digital output signal from the heat carrier's consumption measuring element **1,** and the temperature sensing elements **5, 6.** The generated by the sensor **3** output signal, for example a radiofrequency signal, is transmitted by the communication channel to the calculating block **4,** where the processing and storing of the signal and the heat energy consumption indication is being done. The indication is performed, for example, by a liquid crystal display.

The calculating block **4** is done in such a way, that it can receive signals from several sensors **3,** mounted jointly with the heat carrier's consumption measuring elements 1 and temperature sensing elements 5, 6 near several heat energy emitters (radiators).

The proposed construction of the meter provides a possibility for each of the elements' autonomous adjustment. Also it enables replacement, repair, testing and verification of separate elements (subunits), not the whole meter while being operated. The measuring elements together with the sensor and the calculating block have substantially different operational characteristics, thus, after the verification interval expiry, a replacement not of the entire meter, but rather the measuring elements together with the sensor can be done. This fact simplifies the meter's maintenance and reduces labor and operational costs, thus increasing operational characteristics and reliability.

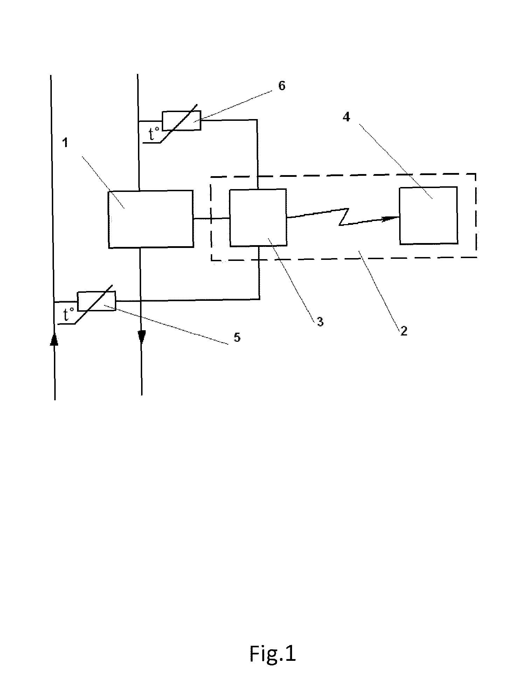

## Claims

1. Heat meter includes a heat carrier's consumption measuring element, a calculator equipped with a heat carrier's outflow and return flow temperature sensing elements and a voltage source, wherein the calculator consists of two blocks: the sensor, which is located directly at the pipeline, alongside the heat carrier's consumption measuring element and the heat carrier's outflow and return flow temperature sensing element, and the calculating block which is located some distance away from the sensor with the heat carrier's consumption measurement element, while the said sensor is made with an ability of the heat carrier's consumption measuring element's and heat carrier's outflow and return flow temperature sensing element's signal conversion into a comprehensive digital output signal proportional to the heat carrier's consumption and the outflow and return flow temperatures with a possibility of its transmission through a communication channel, while the calculating block is made with a capability of receiving through the communication channel, processing, and storing the said comprehensive signal, and indicating the heat consumption aggregated data.
